(19) Europäisches Patentamt / European Patent Office / Office européen des brevets

(11) **EP 3 512 907 B1**

(12) **EUROPEAN PATENT SPECIFICATION**

(45) Date of publication and mention
of the grant of the patent:
**08.11.2023 Bulletin 2023/45**

(21) Application number: **17765139.5**

(22) Date of filing: **05.09.2017**

(51) International Patent Classification (IPC):
*C08J 7/043* (2020.01)     *C08J 7/048* (2020.01)
*C08G 73/02* (2006.01)     *C08J 7/04* (2020.01)

(52) Cooperative Patent Classification (CPC):
**C08G 73/0206; C08G 73/028; C08J 7/0423;
C08J 7/0427; C08J 7/043; C08J 7/048;
C09D 179/00;** C08J 2323/12; C08J 2433/02;
C08J 2479/02

(86) International application number:
**PCT/EP2017/072233**

(87) International publication number:
**WO 2018/050490 (22.03.2018 Gazette 2018/12)**

(54) **METHOD OF PRODUCING POLYMER FILMS WITH GAS-BARRIER PROPERTIES**

VERFAHREN ZUR HERSTELLUNG VON POLYMERFOLIEN MIT
GASBARRIEREEIGENSCHAFTEN

PROCÉDÉ DE PRODUCTION DE FILMS POLYMÈRES PRÉSENTANT DES PROPRIÉTÉS DE
BARRIÈRE AUX GAZ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.09.2016 EP 16188703**

(43) Date of publication of application:
**24.07.2019 Bulletin 2019/30**

(73) Proprietor: **BASF SE**
**67056 Ludwigshafen am Rhein (DE)**

(72) Inventors:
• **PIETSCH, Ines**
  **67056 Ludwigshafen (DE)**

• **PREISHUBER-PFLUEGL, Peter**
  **67056 Ludwigshafen (DE)**
• **HUENERFAUTH, Klaus**
  **67056 Ludwigshafen (DE)**
• **BIPPUS, Patrick**
  **67056 Ludwigshafen (DE)**
• **SMIT, Theo**
  **67056 Ludwigshafen (DE)**

(74) Representative: **BASF IP Association**
**BASF SE**
**G-FLP-C006**
**67056 Ludwigshafen (DE)**

(56) References cited:
**WO-A1-2013/182444     WO-A1-2014/071277
US-A1- 2011 100 454**

**Description**

The invention relates to a method of forming a metallized or metal oxide coated polymeric film comprising (1) coating a polymer film with an aqueous primer solution comprising a solution of at least one polyanion and at least one polyethyleneimine, wherein the polyanion is a polymer comprising at least partially neutralized acid groups having a weight average molecular weight of preferably at least 5000 g/mol prior to neutralization; and wherein said polyethyleneimine has a weight average molecular weight of preferably at least 25000 g/mol; and (2) depositing a metal or a metal oxide on the at least one coated side of the polymer film. The invention also relates to polymer films obtained by the method and to the use of an aqueous solution comprising at least one polyanion and at least one polyethyleneimine as primer coating on a polymer film before metallizing the polymer film with a metal or a metal oxide.

When products that are susceptible to oxidation or products that are sensitive to oxygen are packaged, it is important that the packaging materials used have oxygen-barrier properties, i.e. that they have minimum oxygen transmission or minimum oxygen permeability. Polymer films used as packaging materials and made e.g. of polyolefins, such as polyethylene, or of oriented polypropylene, or of polyesters, e.g. polyethylene terephthalate, generally have relatively high oxygen permeability when they are used in uncoated form. Various measures have therefore been proposed for increasing the oxygen-barrier properties of these packaging materials.

One measure is to metallize the polymer films by depositing a thin layer of metal such as for example aluminum or a thin layer of metal oxide such as aluminum oxide (Alox) or silicium oxide (SiOx) on the polymer film. The metal or metal oxide layers are sometimes not completely homogenous and may have minor, microscopic defects known as pinholes. Further, microscopic cracks may form in the metal or metal oxide layer when the metallized film is crinkled or folded, known as flex cracks. Pinholes and cracks lower oxygen barrier effects.

WO 2014/071277 A1 describes a primer coating for enhancing the adhesion of a metallized coating to a substrate wherein the coating comprises amorphous polyvinyl alcohol, a polyethyleneimine and optionally an aqueous dispersion of polyurethane. WO 2013/182444 A1 describes the use of aqueous polyanion-polyethyleneimine solutions for producing polymer films with oxygen barrier properties.

US 7521103 B1 describes coated polymeric films comprising a polymer film and a coating disposed on at least one side of the film, the coating comprising a copolymer of vinyl alcohol and a vinyl amine reacted with a copolymer of a maleic acid and an acrylic acid, the coating being present in an amount sufficient to increase the oxygen barrier properties of the film.

US 6605344 B1 describes a gas-barrier film comprising (i) a polymer layer formed of a mixture of polyalcohol and at least one poly(meth)acrylic acid polymer selected from the group consisting of poly(meth)acrylic acids and partially neutralized poly(meth)-acrylic acids, and (ii) a metallic-compound-containing layer on a surface of the polymer layer, wherein the metallic-compound-containing layer exhibits a specific surface roughness.

US5225272 describes a metallized film comprising a substrate layer of a synthetic polymeric material having on at least one surface thereof an adherent layer and a metallic layer on the surface of the at least one adherent layer remote from the substrate. The adherent layer comprises an acrylic and/or methacrylic polymer comprising at least one monomer containing a free carboxylic group.

US 2011/100454 A1 describes a composite film comprising a polymeric substrate and a planarising coating layer wherein the surface of the planarised substrate exhibits an Ra value of less than 0.7 nm and/or an Rq value of less than 0.9 nm, and wherein the composite film further comprises a gas-permeation barrier deposited by atomic layer deposition on a planarised surface of the substrate.

It was an object of the present invention to eliminate or minimize pinhole formation and/or flex crack formation of metallized and metal oxide coated polymer films in order to further improve gas barrier effectiveness of metallized polymer films, in particular good oxygen-barrier properties in high humidity environments.

The invention provides a method of forming a metallized or metal oxide coated polymeric film comprising the steps of:

(1) coating at least one side of a polymer film with an aqueous primer solution, the aqueous primer solution comprising a solution of at least one polyanion and at least one polyethyleneimine,
wherein the polyanion is a polymer comprising at least partially neutralized acid groups having a weight average molecular weight of preferably at least 5000 g/mol prior to neutralization; and wherein said polyethyleneimine has a weight average molecular weight of preferably at least 25000 g/mol; and
(2) depositing a metal or a metal oxide on the at least one primer coated side of the polymer film.

The invention also provides a coated polymer film comprising a gas barrier coating obtainable by the method according to the invention as described herein, wherein at least one side of the polymer film has been coated with an aqueous primer solution comprising at least one polyanion and at least one polyethyleneimine,

wherein the polyanion is a polymer comprising at least partially neutralized acid groups having a weight average molecular weight of preferably at least 5000 g/mol prior to neutralization; and wherein said polyethyleneimine has a weight average molecular weight of preferably at least 25000 g/mol; and
the at least one side of the polymer film which has been coated with the aqueous primer solution is metallized by a deposited metal or metal oxide.

The invention also provides the use of an aqueous solution comprising at least one polyanion and at least one polyethyleneimine for forming a metallized or metal oxide coated polymeric film wherein the aqueous solution is applied as primer coating on a polymer film before metallizing the polymer film with a metal or a metal oxide, wherein the polyanion is a polymer comprising at least partially neutralized acid groups.

Improved gas barrier property could be e.g. oxygen, CO2, water vapor, flavor or scent barrier, preferably at least oxygen barrier.

The molecular weight can be determined by gel permeation chromatography (GPC). For polyethyleneimine pullulan is used as standard in a water based solution (water, 0.02 mol/l fumaric acid, 0.2 mol/l KCl); for the polyanion polyacrylic acid is used as standard with water as eluant.

The coating produced according to the invention using the aqueous solution of polymers as primer for a metallization has oxygen-barrier properties. The barrier properties can be measured by the permeability test described in the examples. The term oxygen-barrier property means that oxygen transmission rate (OTR) has been reduced in comparison with an uncoated substrate. The oxygen transmission rate of polymer films coated according to the invention is preferably less than 20%, in particular less than 10%, or less than 5%, e.g. from 1 to 3%, of the value for the uncoated polymer film measured at 23°C and 50% relative humidity; and preferably less than 30% or less than 20 % or less than 10% measured at 23 °C and 85% relative humidity.

The aqueous solution of polymers contains preferably from 10 to 90 wt.%, more preferably from 20 to 80 wt.% of the polyanion, referring to solids content.

The aqueous solution of polymers contains preferably from 10 to 90 wt.%, more preferably from 20 to 80 wt.% of the polyethyleneimine, referring to solids content. The weight ratio of the polyanion (calculated without neutralizing agent) to the polyethyleneimine is preferably from 10:1 to 10:9, more preferably from from 10:2 to 10:5 or from 10:3 to 10:4.

The concentration of the sum of polyanion and polyethyleneimine in the aqueous solution, is preferably at least 1 % by weight, in particular at least 5% by weight and up to 50% by weight or up to 60% by weight, for example from 1 to 50% by weight or from 5 to 40% by weight.

The polyanion is a polymer comprising neutralized acid groups, also named anionic polymer. Anionic polymers are polymers having anionic or acidic groups, in particular organic polymers having carboxylate, phosphate, or sulfate groups or the corresponding acid groups. The term "anionic polymer" also comprises the corresponding polymers with acid groups, as long as they are at least partially neutralized by bases when used in the aqueous solution according to the invention.

Examples of suitable anionic polymers are those formed by polymerization of ethylenically unsaturated anionic monomers. The term "anionic monomer" comprises monomers with at least one anionic or acidic group, wherein the acidic group can be neutralized by a base. The group of anionic polymers also comprises copolymers made of at least one anionic monomer and of one or more than one different non-ionic, non-acidic copolymerizable monomer(s). The polyanion can also be synthesized by polymerization of one or more non-ionic monomers such as acid derivatives like for example ethylenically unsaturated acid esters, followed by a hydrolysis to obtain an anionic polymer. Suitable non-ionic monomers can be alkyl acrylates, alkyl methacrylates (e.g. tert-butyl acrylate, ethyl acrylate etc.) or ethylenically unsaturated acid anhydrids such as maleic anhydride.

Examples of ethylenically unsaturated anionic monomers that can be used are monoethylenically unsaturated $C_3$ to $C_{10}$ or $C_3$ to $C_5$ carboxylic acids, such as acrylic acid, methacrylic acid, ethacrylic acid, crotonic acid, maleic acid, fumaric acid, vinylsulfonic acid, styrenesulfonic acid, acrylamidomethylpropanesulfonic acid, vinylphosphonic acid, itaconic acid, and salts of these acids such as the alkali-metal salts, alkaline-earth-metal salts, or ammonium salts of these acids. Among the anionic monomers preferably used are acrylic acid, methacrylic acid, maleic acid, itaconic acid and 2-acrylamido-2-methylpropanesulfonic acid. Particular preference is given to aqueous solutions of polymers based on acrylic acid. The anionic monomers can either be polymerized alone to give homopolymers or else can be polymerized in a mixture with one another to give copolymers. Examples of these are the homopolymers of acrylic acid, homopolymers of methacrylic acid, copolymers of acrylic acid and maleic acid, copolymers of acrylic acid and methacrylic acid, and copolymers of methacrylic acid and maleic acid. Preferably, the polyanion is selected from polymers capable of being produced from monomers selected from the group consisting of monoethylenically unsaturated $C_3$ to $C_{10}$ carboxylic acids, vinylsulfonic acid, styrenesulfonic acid, acrylamidomethylpropanesulfonic acid, vinylphosphonic acid, and salts of these acids, preferably acrylic acid, methacrylic acid, maleic acid, itaconic acid. Most preferably the polyanion is a polyacrylic acid or a copolymer of acrylic acid and maleic acid.

However, the anionic monomers can also be polymerized in the presence of at least one other ethylenically unsaturated monomer. These monomers can be nonionic or can bear a cationic charge. Examples of nonionic comonomers are acrylamide, methacrylamide, N-$C_1$ to $C_3$-alkylacrylamides, N-vinylformamide, acrylic esters of monohydric alcohols having from 1 to 20 carbon atoms, e.g. in particular methyl acrylate, ethyl acrylate, isobutyl acrylate, and n-butyl acrylate, methacrylic esters of monohydric alcohols having from 1 to 20 carbon atoms, e.g. methyl methacrylate and ethyl methacrylate, and also vinyl acetate and vinyl propionate.

Suitable cationic monomers which can be copolymerized with the anionic monomers are dialkylaminoethyl acrylates, dialkylaminoethyl methacrylates, dialkylaminopropyl acrylates, dialkylaminopropyl methacrylates, dialkylaminoethylacrylamides, dialkylaminoethylmethacrylamides, dialkylaminopropylacrylamides, dialkylaminopropylmethacrylamides, diallyldimethylammonium chloride, vinylimidazole, and also the respective basic monomers neutralized with acids and/or quaternized. Individual examples of cationic monomers are dimethylaminoethyl acrylate, dimethylaminoethyl methacrylate, diethylaminoethyl acrylate, diethylaminoethyl methacrylate, dimethylaminopropyl acrylate, dimethylaminopropyl methacrylate, diethylaminopropyl acrylate, and diethylaminopropyl methacrylate, dimethylaminoethylacrylamide, dimethylaminoethylmethacrylamide, dimethylaminopropylacrylamide, dimethylaminopropylmethacrylamide, diethylaminoethylacrylamid, and diethylaminopropylacrylamide.

The basic monomers can have been completely or only to some extent neutralized or quaternized, for example to an extent of from 1 to 99% in each case. Preferred quaternizing agent used for the basic monomers is dimethyl sulfate. However, the monomers can also be quaternized with diethyl sulfate or with alkyl halides, such as methyl chloride, ethyl chloride, or benzyl chloride. The amount used of the cationic monomers is at most such that the resultant polymer bears a net charge which is anionic at pH < 6.0 and a temperature of 20°C. The excess of anionic charge in the resultant amphoteric polymers is, for example, at least 5 mol%, preferably at least 10 mol%.

The amounts of the non-anionic, non-acidic comonomers used in the production of the anionic polymers are such that the resultant polymers are water-soluble when diluted with water at pH above 7.0 and at a temperature of 20°C (i.e. solubility in water more than 10 g/l at 20°C and pH 7), and have an anionic net charge. Examples of the amount of non-anionic, non-acidic comonomers, based on the total amount of monomers used in the polymerization reaction, are from 0 to 99% by weight, preferably from 1 to 75% by weight, and mostly an amount in the range from 1 to 25% by weight.

Examples of preferred copolymers are copolymers made of from 25 to 90% by weight of acrylic acid and from 75 to 10% by weight of acrylamide. It is preferable to polymerize at least one ethylenically unsaturated $C_3$ to $C_5$ carboxylic acid in the absence of other monoethylenically unsaturated monomers. Particular preference is given to homopolymers of acrylic acid, obtainable via free-radical polymerization of acrylic acid in the absence of other monomers; or to copolymers of acrylic acid and maleic acid.

In one embodiment, the anionic polymer comprises 2-acrylamido-2-methylpropanesulfonic acid (AMPS). It is preferable to copolymerize acrylic acid with AMPS. The amount of AMPS here can be, for example, from 0.1 to 15 mol% or from 0.5 to 10 mol%, based on the amount of all of the monomers.

The polymerization reaction for making the anionic polymer can also be conducted in the presence of at least one crosslinking agent. This then gives copolymers with higher molar mass than when the anionic monomers are polymerized in the absence of any crosslinking agent. Crosslinking agents used can comprise any of the compounds that have at least two ethylenically unsaturated double bonds within the molecule. Examples of crosslinking agents are triallylamine, the triallyl ether of pentaerythritol, the tetra allyl ether of pentaerythritol, methylenebisacrylamide, N,N'-divinylethyleneurea, allyl ethers comprising at least two allyl groups, or vinyl ethers having at least two vinyl groups, where these ethers derive from polyhydric alcohols, e.g. sorbitol, 1,2-ethanediol, 1,4-butanediol, trimethylolpropane, glycerol, diethylene glycol, and from sugars, such as sucrose, glucose, mannose; other examples are dihydric alcohols which have from 2 to 4 carbon atoms and which have been completely esterified with acrylic acid or with methacrylic acid, e.g. ethylene glycol dimethacrylate, ethylene glycol diacrylate, butanediol dimethacrylate, butanediol diacrylate, diacrylates or dimethacrylates of polyethylene glycols with molecular weights from 300 to 600, ethoxylated trimethylenepropane triacrylates or ethoxylated trimethylenepropane trimethacrylates, 2,2-bis-(hydroxymethyl)butanol trimethacrylate, pentaerythritol triacrylate, pentaerythritol tetraacrylate, and triallylmethylammonium chloride. If crosslinking agents are used in the production of the solutions of the invention, examples of the respective amounts used of crosslinking agent are from 0.0005 to 5.0% by weight, preferably from 0.001 to 1.0% by weight, based on the entirety of monomers used in the polymerization reaction, provided that the polymer remains water-soluble at pH > 7. Crosslinking agents preferably used are the triallyl ether of pentaerythritol, the tetra allyl ether of pentaerythritol, N,N'-divinylethylene urea, allyl ethers of sugars such as sucrose, glucose or mannose, where these ethers comprise at least two allyl groups, and triallylamine, and also mixtures of these compounds.

If at least one anionic monomer is polymerized in the presence of at least one crosslinking agent, it is preferable to produce crosslinked copolymers of acrylic acid and/or methacrylic acid by polymerizing acrylic acid and/or methacrylic acid in the presence of the triallyl ether of pentaerythritol, the tetra allyl ether of pentaerythritol, N,N'-divinylethyleneurea, allyl ethers of sugars such as sucrose, glucose or mannose, where these ethers comprise at least two allyl groups, and triallylamine, and also mixtures of these compounds. Preferably the amounts of crosslinking agents used in the polymerization reaction are limited to an extent so that the resultant anionic polymers are soluble in aqueous solution at pH > 7.0.

The weight average molecular weight of the polymer comprising acid groups prior to neutralization is prefarbly at least 5000 g/mol, more preferably at least 10000 g/mol, for example from 5000 to 200000 g/mol or from 10000 to 150000 g/mol.

The acid groups of the polyanion are partially or completely neutralized with at least one base. The base is preferably selected from the group consisting of inorganic bases and monovalent organic bases. A monovalent organic base is an organic compound with a single basic group, e.g. a single amino group. Bases are for example NaOH, KOH, Ca(OH)2, Ba(OH)2, sodium carbonate, potassium carbonate, trisodium phosphate, ammonia or primary, secondary or tertiary organic amines. Preferred bases are ammonia, sodium hydroxide and triethanol amine. Most preferred are volatile bases such as ammonia.

The degree of neutralization of the polyanion is preferably from 30 to 100%, more preferably from 50 to 100%, based on the total molar amount of acidic groups of the anionic polymer.

The aqueous solution comprises at least one polyethyleneimine. Polyethyleneimines are polymers comprising ethyleneimine units. They are preferably branched. The polyethyleneimines can be used neutralized in the form of the salts with suitable acids but are preferably used in unneutralized form.

In one embodiment of the invention, the polyethyleneimine is selected from highly branched or dendritic polyethyleneimines. Highly branched polyethyleneimines are characterized by their high degree of branching (DB). The DB can be determined by $^{13}$C-NMR-spectroscopy, preferably in $D_2O$, and is defined as:

$$DB = D + T/(D+T+L)$$

wherein D (dendritic) correlates to the amount of tertiary amine groups, L (linear) correlates to the amount of secondary amine groups and T (terminal) correlates to the amount of primary amine groups. Highly branched polyethyleneimines according to the invention have a DB of preferably from 0.1 to 0.95, or from 0.25 to 0.9, more preferred from 0.30 to 0.80 and especially preferred of at least 0.5. Dendritic polyethyleneimines have a structural and molecular uniform constitution (DB = 1).

The weight average molecular weight of the polyethylene imines is at least 25000 g/mol, more preferably at least 100000 g/mol, for example from 25000 to 3 million g/mol or from 100000 to 2 million g/mol. The charge density of the polyethylene imines is preferably from 1 to 35 meq/g, more preferably from 5 to 25 meq/g. Charge density can be measured by titration of aqueous solutions of the polyethyleneimine with potassium polyvinyl sulfate (KPVS) at pH 4.5 with toluidine blue as indicator.

Suitable cationic polymers are polymers of ethyleneimine which are produced via polymerization of ethyleneimine in an aqueous medium in the presence of small amounts of acids or of acid-forming compounds, examples being halogenated hydrocarbons, e.g. chloroform, carbon tetrachloride, tetrachloroethane, or ethyl chloride, or are condensates of epichlorohydrin and compounds comprising amino groups, examples being mono- and polyamines, e.g. dimethylamine, diethylamine, ethylenediamine, diethylenetriamine, and triethylenetetramine, or ammonia. By way of example, they have molecular weights $M_w$ of from 25000 to 3 million, preferably from 100000 to 2 million g/mol.

This group of cationic polymers also includes graft polymers of ethyleneimine on compounds having a primary or secondary amino group, examples being polyamidoamines made of dicarboxylic acids and of polyamines. The ethyleneimine-grafted polyamidoamines can also, if appropriate, be reacted with bifunctional crosslinking agents, for example with epichlorohydrin or with bischlorohydrin ethers of polyalkylene glycols.

In one embodiment, the polyethyleneimine is cross-linked. Any crosslinking agent with at least two functional groups capable of forming covalent bonds with amine groups of the polyethyleneimine can be used for crosslinking. Suitable crosslinking agents are for example alkyldialdehyds with preferably 3 to 20 C-atoms such as glutaraldehyde (1,5-pentanedial).

In one embodiment, the polyethylenimine is modified with molecules with functional groups capable of forming covalent bonds with amino groups. Suitable molecules could be aldehydes or carboxylic acids.

The aqueous solution may comprise water as the only solvent or it may comprise a mixture of water and water miscible organic solvents such as methanol, ethanol, acetone or tetrahydrofuran. Preferably water is the only solvent. The pH is preferably from 6 to 12, more preferably from 7 to 10.

The aqueous coating composition can be applied by typical coating machinery to a backing film made of a thermoplastic material. If materials in the form of webs are used, the aqueous polymer solution is usually applied from a trough by way of an applicator roll and rendered uniform with the aid of an air knife. Other suitable possibilities for applying the coating use the reverse gravure process, or spray processes, or a spreader system that uses a roll, or other coating processes known to the person skilled in the art.

The aqueous coating can also be applied in a multi-coating process, wherein a first coating is followed by a second or more coating.

Other suitable coating processes are the known intaglio printing and relief printing processes. Instead of using different inks in the printing-ink units, the process here by way of example uses a printing process for application of the aqueous polymer solution. Printing processes that may be mentioned are the flexographic printing process as a relief printing process known to the person skilled in the art, the gravure process as an example of intaglio printing, and offset printing as an example of flatbed printing. Modern digital printing, inkjet printing, electrophotography and direct imaging can also be used.

In order to achieve a further improvement in adhesion on a polymer film, the backing film can be subjected to a surface treatment prior to coating with the primer composition. A typical surface treatment could be corona treatment. Examples of the amounts applied to the sheet materials are preferably from 0.01 to 50 g (polymer, solid) per $m^2$, preferably from 0.2 to 10 $g/m^2$ or from 0.3 to 3 $g/m^2$.

Once the aqueous primer composition has been applied to the sheet substrates, the solvent is evaporated. For this, by way of example, in the case of continuous operation, the material can be passed through a drying tunnel, which can have an infrared irradiation apparatus. The coated and dried material is then passed over a cooling roll and finally wound up. The thickness of the dried primer coating is preferably from 0.01 to 50 $\mu$m, particularly preferably from 0.2 to 10 $\mu$m, most preferred from 0.3 to 3 $\mu$m.

The deposition of metal or metal oxide (both also referred to as metallization) can be done by various process steps, including for example vacuum metallization, arc and flame spraying or electroplating etc. A preferred process, in particular for packaging purposes, is vacuum metallization. Vacuum coating and metallizing is the process of adding a thin film of coating material, such as for example aluminum, to a material (see http://www.bobst.com/usen/products/vacuum-coating-metallizing/process). In principle, the process calls for the evaporation of the coating material inside a vacuum chamber, after which it condenses onto a web of substrate as it passes through. A vacuum coater, also referred to as a vacuum metallizer or barrier coating machine, consists of a vacuum chamber which has been evacuated to, typically, 0.0005 mbar. Inside this chamber, aluminum wire is fed onto individual, resistance-heated inter-metallic evaporators, where the aluminum becomes molten and evaporates. The flexible substrate, supported on a chilled process drum, passes over the evaporation source at speeds of up to 1000 m/min. The aluminum vapor condenses onto the substrate and so creates the coating layer.

The metallized film of the present invention can be produced by vapor-depositing a metal or a metal oxide onto a base film. The base film can be produced by conventional film forming method such as for example a blown film forming method, a T-die method, or a calendering method. The base film prior to being subjected to metallization may have been drawn. A drawn base film can be produced by drawing a film or a sheet prepared from a resin composition. Examples of methods for the drawing include methods involving uniaxially or biaxially drawing films by a roll drawing process, a tenter drawing process, a tubular drawing process, or the like. Before the metallization, surface treatment, such as corona discharge treatment, plasma treatment, and flame treatment, may be applied to the base film on its surface on which a metal or a metal oxide is to be deposited. Corona treatment is preferred.

The thickness of the base film onto which a metal or a metal oxide is to be deposited is preferably 1 $\mu$m to 500 $\mu$m, more preferably 5 $\mu$m to 100 $\mu$m.

Preferred metal materials for metal deposition are selected from the group consisting of aluminum, titanium, chromium, nickel, copper, germanium, tin, and selenium, and examples of the metal oxide include silica and aluminum oxide. Preferable is aluminum, silica, or aluminum oxide, most preferred is aluminum.

The thickness of the metallized layer is preferably 50 Å to 1000 Å, preferably 100 Å to 700 Å.

One embodiment of the invention is a polymer film comprising an oxygen barrier coating wherein at least one side of the polymer film has been coated with an aqueous primer solution comprising a solution of at least one polyanion and at least one polyethyleneimine (as described above),

    wherein the polyanion is a polymer comprising at least partially neutralized acid groups having a weight average molecular weight of preferably at least 5000 g/mol prior to neutralization; and
    wherein said polyethyleneimine has a weight average molecular weight of preferably at least 25000 g/mol; and
    the at least one side of the polymer film which has been coated with the aqueous primer solution is metallized by a deposited metal or metal oxide.

The aqueous polymer solutions used for the coating process can comprise further additives or auxiliaries, e.g. thickeners for adjusting rheology, wetting aids, or binders. Preferred polymer film substrates are polymer films which are suitable for packaging.

Preferred polymer films are made of oriented polypropylene or polyethylene, where the polyethylene can have been produced from ethylene either by the high-pressure polymerization process or by the low-pressure polymerization process. Examples of other suitable polymer films are made of polyester, such as polyethylene terephthalate, and films made of polyamide, polystyrene and polyvinyl chloride. In one embodiment, the polymer film is biodegradable, e.g. made of biodegradable aliphatic-aromatic copolyesters and/or polylactic acid, an example being Ecoflex® films or Ecovio®

films. Examples of suitable copolyesters are those formed from alkanediols, in particular C2 to C8 alkanediols, e.g. 1 ,4-butanediol, and from aliphatic dicarboxylic acids, in particular C2 to C8 dicarboxylic acids, e.g. adipic acid, and from aromatic dicarboxylic acids, e.g. terephthalic acid.

Preferred polymer film materials are selected from polyethylene terephthalate, oriented polypropylene, casted polypropylene, polyethylene, biodegradable aliphatic-aromatic copolyesters, and polyamide.

The thickness of the polymer film can be in the range from 5 to 400 $\mu$m, in the case of films made of polyamide from 5 to 50 $\mu$m, in the case of films made of polyethylene terephthalate from 10 to 100 $\mu$m, in case of oriented polypropylene form 10 to 100 $\mu$m, in the case of films of polyvinyl chloride about 50 - 300 $\mu$m, and in the case of films made of polystyrene about 30-75 $\mu$m.

Preferably, the oxygen barrier coating on the polymer film is pore-free, which can be analyzed by atomic force microscopy (AFM) or scanning electron microscope (SEM).

The metallized polymeric films of the invention exhibit excellent oxygen-barrier action, in particular in high humidity environments. The coated substrates can be used for example as means of packaging, preferably for packaging foods.

The oxygen barrier coating can also be used as a barrier coating against other substances, which could be gases, liquids or solids. Such substances can be carbon dioxide, nitrogen, bisphenol A (BPA), mineral oil, fat, aldehydes, grease, plasticizer, photoinitiators or aroma substances.

As well known from several examples in literature (i.e. EP 680823) the properties of metallized or metal oxide coated films could be improved by applying an additional coating with barrier properties. In order to obtain specific additional surface properties or specific coating properties of the metallized or metal oxide coated polymer films, for example good printability, or further improved sealing and non-blocking properties, or good water-resistance, or further enhanced gas barrier properties, it can be advantageous to overcoat the metallized or metal oxide coated polymer films with additional layers which provide these desired additional properties. The metallized films according to the invention can readily be overcoated. For the overcoating process, one of the processes mentioned above can be repeated, or repeated coating can be carried out in a continuous process without any intervening wind-up and unwind of the foil. The surface properties are then determined by the additional layer.

In one embodiment, a polymer film of the invention comprises in addition to the oxygen barrier coating (primer coating plus metallization) at least one additional layer made from materials selected from the group consisting of polyacrylates, polyvinylidene chloride (PVDC), waxes, epoxy resins, UV curable acrylates and polyurethanes and solutions comprising at least one polyanion and at least one polyethyleneimine.

A preferred metallized or metal oxide coated polymer film of the invention is a polymer film which has been coated with the aqueous primer solution and is metallized by deposited aluminum in the presence of oxygen to result in an aluminium oxide coated film and the metallization layer is overcoated with an additional layer made of a solution comprising at least one polyanion and at least one polyethyleneimine.

Another preferred metallized polymer film of the invention is a polymer film which has been coated with the aqueous primer solution and is metallized by deposited aluminum and the metallization layer is overcoated with an additional layer made of a solution comprising at least one polyanion and at least one polyethyleneimine.

In one embodiment of the invention a metallized polymer film of the invention as described above is laminated with at least one additional material wherein the at least one additional material is selected from polyethylene terephthalate, oriented polypropylene, polyethylene, casted polypropylene, biodegradable aliphatic-aromatic copolyesters, metallized polyethylene terephthalate, metallized oriented polypropylene, polyamide, paper and board.

Another embodiment of the invention is a package comprising a polymer film or laminated film according to the invention as described above.

Use of the aqueous primer solution according to the invention reduces the amounts of pinholes, as measured by Scanning Electron Microscopy (SEM), and thereby further improving the gas barrier effect.

Examples

Abbreviations:

| | |
|---|---|
| PEI | aqueous solution of polyethyleneimine, Mw = 750000 g/mol; charge density 17 meq/g, pH = 11, Lupasol® P |
| PAS | copolymer of polyacrylic acid and maleic acid (75 : 25), Mw = 80000 g/mol |
| BOPP | biaxial oriented polypropylene |
| BOPP met | biaxial oriented polypropylene, metallized on one side with aluminum Metallization is achieved by vapor deposition of aluminum. |
| Primer | Aqueous primer solution of: |

100 parts by weight of PAS, 25 parts by weight ammonia, 40 parts by weight PEI. The PAS is pre-neutralized with ammonia before combining with the polyethylene imine.

Measurement of oxygen-barrier action:

Oxygen transmission is determined on coatings on polymer films at a relative humidity (RH) level as indicated below. Measurements are done with 100% oxygen gas at a temperature of 23°C.

Carrier material:

polymer film of BOPP (biaxial oriented polypropylene) with a thickness of 20 $\mu$m. Oxygen transmission rate of the uncoated BOPP film at 85% RH/23 °C:
about 975 $cm^3/(m^{2*}d)$.

The determination method is based on ASTM D3985, using a coulometric sensor. Each sample is measured twice and the mean result is calculated.

The transmission of a multi-layer system is calculated according to the equation

$$\frac{1}{TR_{total}} = \frac{1}{TR_A} + \frac{1}{TR_B} + \cdots$$

wherein $TR_{total}$ is the oxygen transmission of the multi-layer film and $TR_A$ and $TR_B$ are the oxygen transmissions of layer A and layer B, respectively.

The BOPP-Films are coated and metallized ("met") as summarized in Table 1. The samples according to the invention are coated with the primer prior to metallization. The results of oxygen transmission rate measurements are summarized in Table 1.

Table 1: oxygen transmission rate measurement results

| sample | Layer structure | Layer thickness [$\mu$m] | Relative humidity [%] | Oxygen transmission rate [$cm^3/(m^{2*}d)$] |
|---|---|---|---|---|
| 1a | BOPP met | 20 + met | 50 | 29 |
| 1b | BOPP met | 20 + met | 85 | 29 |
| 2a | BOPP + Primer | 20 + 1,2 | 50 | 4,3 |
| 2b | BOPP + Primer | 20 + 1,2 | 75 | 12,2 |
| 3a | BOPP + Primer + met | 20 + 1,2 + met | 50 | 0,5 |
| 3b | BOPP + Primer + met | 20 + 1,2 + met | 85 | 3,6 |

Evaluation of pinhole formation

Metallized BOPP films were analyzed by Scanning Electron Microscopy (SEM). The detected pinholes and defects on an area of about 0,5 $mm^2$ were counted. The results were averaged for three representative areas for each film.

The results are evaluated according to the following rating scheme:

rating 1 = no pinholes or defects
rating 2 = 1 to 5 pinholes or defects per 0,5 $mm^2$
rating 3 = 6 to 10 pinholes or defects per 0,5 $mm^2$
rating 4 = more than 10 pinholes or defects per 0,5 $mm^2$

Table 2: Evaluation of pinhole formation of metallized polymer films

| sample | Layer structure | Pinhole and defect rating |
|---|---|---|
| 1 | BOPP met | 4 |
| 3 | BOPP + Primer + met | 1-2 |

The data show that coating with the primer significantly reduced pinhole formation and defects of the subsequent metallization.

Figure 1:

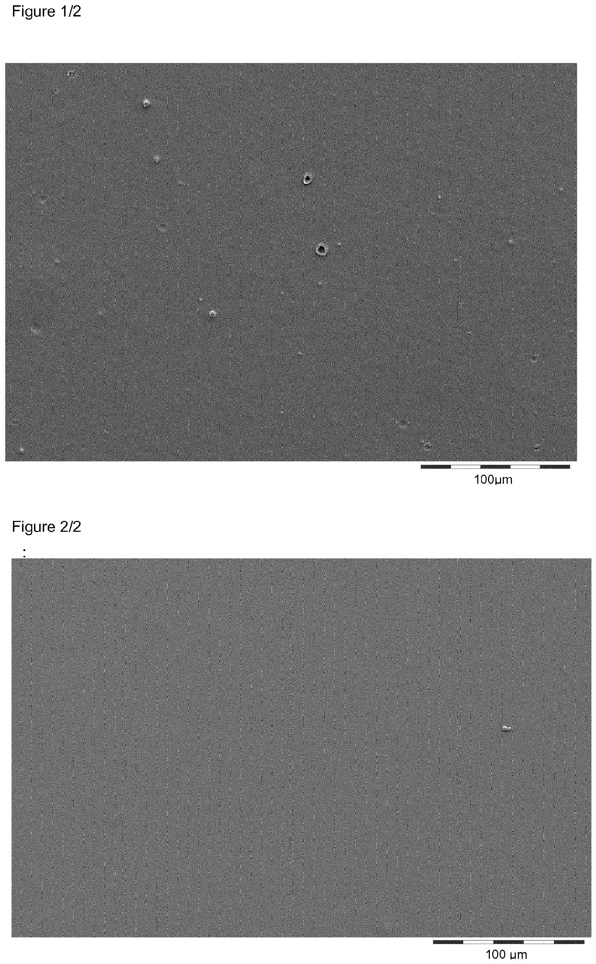

Figure 1 shows a Scanning Electron Microscopy picture of the surface of metallized BOPP film without primer coating (sample 1)

Figure 2:
Figure 2 shows a Scanning Electron Microscopy picture of the surface of metallized BOPP film with primer coating prior to metallization (sample 3)

## Claims

1. A method of forming a metallized or metal oxide coated polymeric film comprising the steps of:

   (1) coating at least one side of a polymer film with an aqueous primer solution, the aqueous primer solution comprising a solution of at least one polyanion and at least one polyethyleneimine, wherein the polyanion is a polymer comprising at least partially neutralized acid groups having a weight average molecular weight of preferably at least 5000 g/mol prior to neutralization; and wherein said polyethyleneimine has a weight average molecular weight of preferably at least 25000 g/mol; and
   (2) depositing a metal or a metal oxide on the at least one primer coated side of the polymer film.

2. The method of the preceding claim, wherein the polyanion is a polymer comprising acid groups neutralized with at least one base selected from the group consisting of inorganic bases and monovalent organic bases.

3. The method according to any of the preceding claims, wherein the aqueous solution contains

   (a) from 10 to 90 wt.%, referring to solids content, of the polyanion and
   (b) from 10 to 90 wt.%, referring to solids content, of the polyethyleneimine;

   and wherein the weight ratio of the polyanion, calculated without neutralizing agent, to the polyethyleneimine is preferably from 10:2 to 10:5.

4. The method according to any of the preceding claims, wherein the polyanion is selected from polymers capable of being produced from at least one monomer selected from the group consisting of monoethylenically unsaturated $C_3$ to $C_{10}$ carboxylic acids, vinylsulfonic acid, styrenesulfonic acid, acrylamidomethylpropanesulfonic acid, vinylphosphonic acid, and salts of these acids, preferably acrylic acid, methacrylic acid, maleic acid, itaconic acid, most preferably the polyanion is selected from at least one polymer of the group consisting of homopolymers of acrylic acid, homopolymers of methacrylic acid, copolymers of acrylic acid and maleic acid, copolymers of acrylic acid and methacrylic acid, and copolymers of methacrylic acid and maleic acid.

5. The method according to any of the preceding claims, wherein the weight average molecular weight of the polymer comprising acid groups is from 5000 to 200000 g/mol as measured according to the description.

6. The method according to any of the preceding claims, wherein the polyethyleneimine is branched, and the weight average molecular weight of the polyethyleneimine is from 25000 to 3 million g/mol as measured according to the description and the charge density of the polyethyleneimine is from 1 to 35 meq/g as measured according to the description.

7. The method according to any of the preceding claims, wherein the degree of neutralization of the polyanion is from 30 to 100% and wherein the pH of the aqueous solution is from 6 to 12.

8. The method according to any of claims 2 to 7, wherein the base is selected from the group consisting of ammonia, sodium hydroxide and triethanol amine.

9. The method according to any of the preceding claims, wherein the metal or metal oxide is selected from one or more of the group consisting of aluminum, titanium, chromium, nickel, copper, germanium, tin, selenium, silicium oxide and aluminum oxide, preferably aluminum.

10. The method according to any of the preceding claims, wherein the deposition of metal or metal oxide is done by vacuum metallization, arc and flame spraying or electroplating, preferably by vacuum metallization.

11. A polymer film comprising an oxygen barrier coating wherein

at least one side of the polymer film has been coated with an aqueous primer solution comprising a solution of at least one polyanion and at least one polyethyleneimine,
wherein the polyanion is a polymer comprising at least partially neutralized acid groups having a weight average molecular weight of preferably at least 5000 g/mol prior to neutralization; and wherein said polyethyleneimine has a weight average molecular weight of preferably at least 25000 g/mol; and
the at least one side of the polymer film which has been coated with the aqueous primer solution is metallized by a deposited metal or metal oxide.

12. A polymer film according to claim 11, wherein the material of the polymer film is selected from polyethylene terephthalate, oriented polypropylene, polyethylene, casted polypropylene, biodegradable aliphatic-aromatic copolyesters, and polyamide and the metal or metal oxide is selected from one or more of the group consisting of aluminum, titanium, chromium, nickel, copper, germanium, tin, selenium, silica and aluminum oxide, preferably aluminum.

13. A polymer film according to any of claims 11 to 12, wherein the thickness of the primer layer after drying is from 0.01 to 50 $\mu$m.

14. A polymer film according to any of claims 11 to 13, wherein the polymer film comprises at least one additional layer made from materials selected from the group consisting of polyacrylates, polyvinylidene chloride, waxes, epoxy resins, UV curable acrylates, polyurethanes and solutions comprising at least one polyanion and at least one polyethyleneimine.

15. A polymer film according to any of claims 11 to 14 which is laminated with at least one additional material wherein the at least one additional material is selected from polyethylene terephthalate, oriented polypropylene, polyethylene, casted polypropylene, biodegradable aliphatic-aromatic copolyesters, metallized polyethylene terephthalate, metallized oriented polypropylene, polyamide, paper and board.

16. A polymer film according to any of claims 11 to 14 wherein the polymer film which has been coated with the aqueous primer solution is metallized by deposited aluminum oxide and the metallization layer is overcoated with an additional layer made of a solution comprising at least one polyanion and at least one polyethyleneimine.

17. A package comprising a polymer film according to any of claims 11 to 16.

18. The use of an aqueous solution comprising at least one polyanion and at least one polyethyleneimine for forming a metallized or metal oxide coated polymeric film wherein the aqueous solution is applied as primer coating on a polymer film before metallizing the polymer film with a metal or a metal oxide, wherein the polyanion is a polymer comprising at least partially neutralized acid groups.

19. The use according to the preceding claim, wherein the polyanion is a polymer comprising at least partially neutralized acid groups and said polymer comprising acid groups having a weight average molecular weight of at least 5000 g/mol prior to neutralization as measured according to the description;
and wherein said polyethyleneimine has a weight average molecular weight of at least 25000 g/mol as measured according to the description.

**EP 3 512 907 B1**

**Patentansprüche**

1. Verfahren zur Herstellung eines metallisierten oder metalloxidbeschichteten Polymerfilms, umfassend die Schritte:

   (1) Beschichten wenigstens einer Seite eines Polymerfilms mit einer wässrigen Grundierungslösung, wobei die wässrige Grundierungslösung eine Lösung von wenigstens einem Polyanion und wenigstens einem Polyethylenimin umfasst,
   wobei das Polyanion ein Polymer ist, das wenigstens teilweise neutralisierte Säuregruppen mit einem gewichtsgemittelten Molekulargewicht von vorzugsweise wenigstens 5000 g/mol vor Neutralisation umfasst; und wobei das Polyethylenimin ein gewichtsgemitteltes Molekulargewicht von vorzugsweise wenigstens 25000 g/mol aufweist; und
   (2) Abscheiden eines Metalls oder eines Metalloxids auf die wenigstens eine grundierungsbeschichtete Seite des Polymerfilms.

2. Verfahren gemäß dem vorstehenden Anspruch, wobei das Polyanion ein Polymer ist, das Säuregruppen umfasst, die mit wenigstens einer Base ausgewählt aus der Gruppe bestehend aus anorganischen Basen und einwertigen organischen Basen neutralisiert sind.

3. Verfahren gemäß einem der vorstehenden Ansprüche, wobei die wässrige Lösung enthält:

   (a) von 10 bis 90 Gew.-%, bezogen auf den Feststoffgehalt, an dem Polyanion und
   (b) von 10 bis 90 Gew.-%, bezogen auf den Feststoffgehalt, an dem Polyethylenimin;

   und wobei das Gewichtsverhältnis des Polyanions, berechnet ohne Neutralisationsmittel, zu dem Polyethylenimin vorzugsweise von 10:2 bis 10:5 beträgt.

4. Verfahren gemäß einem der vorstehenden Ansprüche, wobei das Polyanion ausgewählt ist aus Polymeren, die aus wenigstens einem Monomer ausgewählt aus der Gruppe bestehend aus monoethylenisch ungesättigten $C_3$- bis $C_{10}$-Carbonsäuren, Vinylsulfonsäure, Styrolsulfonsäure, Acrylamidomethylpropansulfonsäure, Vinylphosphonsäure und Salzen dieser Säuren, vorzugsweise Acrylsäure, Methacrylsäure, Maleinsäure, Itaconsäure, hergestellt werden können, wobei das Polyanion höchst bevorzugt ausgewählt ist aus wenigstens einem Polymer der Gruppe bestehend aus Homopolymeren von Acrylsäure, Homopolymeren von Methacrylsäure, Copolymeren von Acrylsäure und Maleinsäure, Copolymeren von Acrylsäure und Methacrylsäure und Copolymeren von Methacrylsäure und Maleinsäure.

5. Verfahren gemäß einem der vorstehenden Ansprüche, wobei das gewichtsgemittelte Molekulargewicht des Polymers, das Säuregruppen umfasst, von 5000 bis 200000 g/mol, wie gemessen gemäß der Beschreibung, beträgt.

6. Verfahren gemäß einem der vorstehenden Ansprüche, wobei das Polyethylenimin verzweigt ist und das gewichtsgemittelte Molekulargewicht des Polyethylenimins von 25000 bis 3 Millionen g/mol, wie gemessen gemäß der Beschreibung, beträgt und die Ladungsdichte des Polyethylenimins von 1 bis 35 meq/g, wie gemessen gemäß der Beschreibung, beträgt.

7. Verfahren gemäß einem der vorstehenden Ansprüche, wobei der Neutralisationsgrad des Polyanions von 30 bis 100 % beträgt und wobei der pH-Wert der wässrigen Lösung von 6 bis 12 beträgt.

8. Verfahren gemäß einem der Ansprüche 2 bis 7, wobei die Base ausgewählt ist aus der Gruppe bestehend aus Ammoniak, Natriumhydroxid und Triethanolamin.

9. Verfahren gemäß einem der vorstehenden Ansprüche, wobei das Metall oder Metalloxid ausgewählt ist aus einem oder mehreren der Gruppe bestehend aus Aluminium, Titan, Chrom, Nickel, Kupfer, Germanium, Zinn, Selen, Siliciumoxid und Aluminiumoxid, vorzugsweise Aluminium.

10. Verfahren gemäß einem der vorstehenden Ansprüche, wobei das Abscheiden des Metalls oder Metalloxids durch Unterdruckmetallisieren, Bogen- und Flammensprühen oder Elektroplattieren durchgeführt wird, vorzugsweise durch Unterdruckmetallisieren.

11. Polymerfilm, umfassend eine Sauerstoffbarrierebeschichtung, wobei

wenigstens eine Seite des Polymerfilms mit einer wässrigen Grundierungslösung, die eine Lösung von wenigstens einem Polyanion und wenigstens einem Polyethylenimin umfasst, beschichtet worden ist,

wobei das Polyanion ein Polymer ist, das wenigstens teilweise neutralisierte Säuregruppen mit einem gewichtsgemittelten Molekulargewicht von vorzugsweise wenigstens 5000 g/mol vor Neutralisation umfasst; und wobei das Polyethylenimin ein gewichtsgemitteltes Molekulargewicht von vorzugsweise wenigstens 25000 g/mol aufweist; und

die wenigstens eine Seite des Polymerfilms, die mit der wässrigen Grundierungslösung beschichtet worden ist, mit einem abgeschiedenen Metall oder Metalloxid metallisiert ist.

12. Polymerfilm gemäß Anspruch 11, wobei das Material des Polymerfilms ausgewählt ist aus Polyethylenterephthalat, orientiertem Polypropylen, Polyethylen, gegossenem Polypropylen, bioabbaubaren aliphatisch-aromatischen Copolyestern und Polyamid, und das Metall oder Metalloxid ausgewählt ist aus einem oder mehreren der Gruppe bestehend aus Aluminium, Titan, Chrom, Nickel, Kupfer, Germanium, Zinn, Selen, Siliciumoxid und Aluminiumoxid, vorzugsweise Aluminium.

13. Polymerfilm gemäß einem der Ansprüche 11 bis 12, wobei die Dicke des Grundierungsschicht nach Trocknen von 0,01 bis 50 μm beträgt.

14. Polymerfilm gemäß einem der Ansprüche 11 bis 13, wobei der Polymerfilm wenigstens eine zusätzliche Schicht umfasst, die aus Materialien ausgewählt aus der Gruppe bestehend aus Polyacrylaten, Polyvinylidenchlorid, Wachsen, Epoxyharzen, UV-härtbaren Acrylaten, Polyurethanen und Lösungen, die wenigstens ein Polyanion und wenigstens ein Polyethylenimin umfassen, hergestellt ist.

15. Polymerfilm gemäß einem der Ansprüche 11 bis 14, der mit wenigstens einem zusätzlichen Material laminiert ist, wobei das wenigstens eine zusätzliche Material ausgewählt ist aus Polyethylenterephthalat, orientiertem Polypropylen, Polyethylen, gegossenem Polypropylen, bioabbaubaren aliphatisch-aromatischen Copolyestern, metallisiertem Polyethylenterephthalat, metallisiertem orientiertem Polypropylen, Polyamid, Papier und Pappe.

16. Polymerfilm gemäß einem der Ansprüche 11 bis 14, wobei der Polymerfilm, der mit der wässrigen Grundierungslösung beschichtet worden ist, mit abgeschiedenem Aluminiumoxid metallisiert ist und die Metallisierungsschicht mit einer zusätzlichen Schicht überschichtet ist, die aus einer Lösung hergestellt ist, die wenigstens ein Polyanion und wenigstens ein Polyethylenimin umfasst.

17. Verpackung, umfassend einen Polymerfilm gemäß einem der Ansprüche 11 bis 16.

18. Verwendung einer wässrigen Lösung, die wenigstens ein Polyanion und wenigstens ein Polyethylenimin umfasst, zum Bilden eines metallisierten oder metalloxidbeschichteten Polymerfilms, wobei die wässrige Lösung als Grundierungsbeschichtung auf einen Polymerfilm aufgebracht wird, bevor der Polymerfilm mit einem Metall oder einem Metalloxid metallisiert wird, wobei das Polyanion ein Polymer ist, das wenigstens teilweise neutralisierte Säuregruppen umfasst.

19. Verwendung gemäß dem vorstehenden Anspruch, wobei das Polyanion ein Polymer ist, das wenigstens teilweise neutralisierte Säuregruppen umfasst, und das Polymer Säuregruppen mit einem gewichtsgemittelten Molekulargewicht von wenigstens 5000 g/mol vor Neutralisation, wie gemessen gemäß der Beschreibung, umfasst; und wobei das Polyethylenimin ein gewichtsgemitteltes Molekulargewicht von wenigstens 25000 g/mol, wie gemessen gemäß der Beschreibung, aufweist.

**Revendications**

1. Procédé de formation d'un film polymérique métallisé ou revêtu par un oxyde métallique comprenant les étapes de :

(1) revêtement d'au moins un côté d'un film de polymère avec une solution aqueuse d'apprêt, la solution aqueuse d'apprêt comprenant une solution d'au moins un polyanion et d'au moins une polyéthylèneimine,

le polyanion étant un polymère comprenant des groupes de type acide au moins partiellement neutralisés ayant un poids moléculaire moyen en poids de préférablement au moins 5 000 g/mole avant la neutralisation ; et ladite polyéthylèneimine ayant un poids moléculaire moyen en poids de préférablement au moins 25 000 g/mole ; et

(2) dépôt d'un métal ou d'un oxyde métallique sur l'au moins un côté revêtu par un apprêt du film de polymère.

2. Procédé selon la revendication précédente, le polyanion étant un polymère comprenant des groupes de type acide neutralisés par au moins une base choisie dans le groupe constitué par des bases organiques monovalentes et des bases inorganiques.

3. Procédé selon l'une quelconque des revendications précédentes, la solution aqueuse contenant

(a) de 10 à 90 % en poids, par référence à la teneur en solides, du polyanion et
(b) de 10 à 90 % en poids, par référence à la teneur en solides, de la polyéthylèneimine ;

et le rapport en poids du polyanion, calculé sans agent de neutralisation, sur la polyéthylèneimine étant préférablement de 10 : 2 à 10 : 5.

4. Procédé selon l'une quelconque des revendications précédentes, le polyanion étant choisi parmi des polymères capables d'être produits à partir d'au moins un monomère choisi dans le groupe constitué par des acides carboxyliques monoéthyléniquement insaturés en $C_3$-$C_{10}$, l'acide vinylsulfonique, un acide styrènesulfonique, l'acide acrylamidométhylpropanesulfonique, l'acide vinylphosphonique, et des sels de ces acides, préférablement l'acide acrylique, l'acide méthacrylique, l'acide maléique, l'acide itaconique, le plus préférablement le polyanion étant choisi parmi au moins un polymère du groupe constitué par des homopolymères d'acide acrylique, des homopolymères d'acide méthacrylique, des copolymères d'acide acrylique et d'acide maléique, des copolymères d'acide acrylique et d'acide méthacrylique, et des copolymères d'acide méthacrylique et d'acide maléique.

5. Procédé selon l'une quelconque des revendications précédentes, le poids moléculaire moyen en poids du polymère comprenant des groupes de type acide étant de 5 000 à 200 000 g/mole comme mesuré selon la description.

6. Procédé selon l'une quelconque des revendications précédentes, la polyéthylèneimine étant ramifiée, et le poids moléculaire moyen en poids de la polyéthylèneimine étant de 25 000 à 3 millions g/mole comme mesuré selon la description et la densité de charge de la polyéthylèneimine étant de 1 à 35 méq/g comme mesuré selon la description.

7. Procédé selon l'une quelconque des revendications précédentes, le degré de neutralisation du polyanion étant de 30 à 100 % et le pH de la solution aqueuse étant de 6 à 12.

8. Procédé selon l'une quelconque des revendications 2 à 7, la base étant choisie dans le groupe constitué par l'ammoniac, l'hydroxyde de sodium et la triéthanolamine.

9. Procédé selon l'une quelconque des revendications précédentes, le métal ou l'oxyde métallique étant choisi parmi l'un ou plusieurs du groupe constitué par l'aluminium, le titane, le chrome, le nickel, le cuivre, le germanium, l'étain, le sélénium, l'oxyde de silicium et l'oxyde d'aluminium, préférablement l'aluminium.

10. Procédé selon l'une quelconque des revendications précédentes, le dépôt de métal ou d'oxyde métallique étant réalisé par métallisation sous vide, pulvérisation à arc et flamme ou électrodéposition, préférablement par métallisation sous vide.

11. Film de polymère comprenant un revêtement barrière à l'oxygène,

au moins un côté du film de polymère ayant été revêtu par une solution aqueuse d'apprêt comprenant une solution d'au moins un polyanion et d'au moins une polyéthylèneimine,
le polyanion étant un polymère comprenant des groupes de type acide au moins partiellement neutralisés ayant un poids moléculaire moyen en poids de préférablement au moins 5 000 g/mole avant la neutralisation ; et
ladite polyéthylèneimine ayant un poids moléculaire moyen en poids de préférablement au moins 25 000 g/mole ; et
l'au moins un côté du film de polymère qui a été revêtu par la solution aqueuse d'apprêt étant métallisé par un métal ou un oxyde métallique déposé.

12. Film de polymère selon la revendication 11, le matériau du film de polymère étant choisi parmi un poly(téréphtalate d'éthylène), un polypropylène orienté, un polyéthylène, un polypropylène coulé, des copolyesters aliphatiques-aromatiques biodégradables, et un polyamide et le métal ou l'oxyde métallique étant choisi parmi l'un ou plusieurs du groupe constitué par l'aluminium, le titane, le chrome, le nickel, le cuivre, le germanium, l'étain, le sélénium, la silice et l'oxyde d'aluminium, préférablement l'aluminium.

**13.** Film de polymère selon l'une quelconque des revendications 11 à 12, l'épaisseur de la couche d'apprêt après séchage étant de 0,01 à 50 µm.

**14.** Film de polymère selon l'une quelconque des revendications 11 à 13, le film de polymère comprenant au moins une couche supplémentaire préparée à partir de matériaux choisis dans le groupe constitué par des polyacrylates, un poly(chlorure de vinylidène), des cires, des résines époxy, des acrylates durcissables par des UV, des polyuréthanes et des solutions comprenant au moins un polyanion et au moins une polyéthylèneimine.

**15.** Film de polymère selon l'une quelconque des revendications 11 à 14 qui est stratifié avec au moins un matériau supplémentaire, l'au moins un matériau supplémentaire étant choisi parmi un poly(téréphtalate d'éthylène), un polypropylène orienté, un polyéthylène, un polypropylène coulé, des copolyesters aliphatiques-aromatiques biodégradables, un poly(téréphtalate d'éthylène) métallisé, un polypropylène orienté métallisé, un polyamide, du papier et du carton.

**16.** Film de polymère selon l'une quelconque des revendications 11 à 14, le film de polymère qui a été revêtu par la solution aqueuse d'apprêt étant métallisé par de l'oxyde d'aluminium déposé et la couche de métallisation étant recouverte par une couche supplémentaire composée d'une solution comprenant au moins un polyanion et au moins une polyéthylèneimine.

**17.** Emballage comprenant un film de polymère selon l'une quelconque des revendications 11 à 16.

**18.** Utilisation d'une solution aqueuse comprenant au moins un polyanion et au moins une polyéthylèneimine pour la formation d'un film polymérique métallisé ou revêtu par un oxyde métallique, la solution aqueuse étant appliquée comme un revêtement d'apprêt sur un film de polymère avant métallisation du film de polymère avec un métal ou un oxyde métallique, le polyanion étant un polymère comprenant des groupes de type acide au moins partiellement neutralisés.

**19.** Utilisation selon la revendication précédente, le polyanion étant un polymère comprenant des groupes de type acide au moins partiellement neutralisés et ledit polymère comprenant des groupes de type acide ayant un poids moléculaire moyen en poids d'au moins 5 000 g/mole avant la neutralisation comme mesuré selon la description ; et ladite polyéthylèneimine ayant un poids moléculaire moyen en poids d'au moins 25 000 g/mole comme mesuré selon la description.

Figure 1/2

100μm

Figure 2/2

100 μm

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014071277 A1
- WO 2013182444 A1
- US 7521103 B1
- US 6605344 B1
- US 5225272 A
- US 2011100454 A1
- EP 680823 A